Europäisches Patentamt

European Patent Office

Office européen des brevets

(19)

(11) **EP 0 633 670 B1**

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.⁶: **H04B 7/005**, H04L 7/033

(21) Anmeldenummer: **93111762.6**

(22) Anmeldetag: **22.07.1993**

(54) **Verfahren zur Gewinnung eines Rahmentaktes auf der Empfangsseite eines bandbegrenzten Übertragungskanals**

Method for recovery of the frame clock at the reception side of a band-limited communications channel

Procédé pour la récupération de la phase de l'horloge de trame du côté réception d'un canal de communication à bande limitée

(84) Benannte Vertragsstaaten:
**DE FR GB IT**

(30) Priorität: **06.07.1993 DE 4322497**

(43) Veröffentlichungstag der Anmeldung:
**11.01.1995 Patentblatt 1995/02**

(73) Patentinhaber: **AEG MOBILE COMMUNICATION GmbH**
**D-89081 Ulm (DE)**

(72) Erfinder: **Reiner, Michael, Dipl.-Ing.**
**D-89075 Ulm/Donau (DE)**

(74) Vertreter: **Körner, Ekkehard, Dipl.-Ing.**
**Patentanwalt**
**Maximilianstrasse 58**
**80538 München (DE)**

(56) Entgegenhaltungen:
**EP-A- 0 496 467**          **US-A- 4 899 367**

- **PROCEEDINGS OF 1985 NORDIC SEMINAR ON DIGITAL LAND MOBILE RADIOCOMMUNICATION 5-7 February 1985, Espoo (FIN) HELSINKI (FIN)**
- **PROCEEDINGS OF 1985 NORDIC SEMINAR ON DIGITAL LAND MOBILE RADIOCOMMUNICATION 5-7 February 1985, Espoo (FIN) HELSINKI (FIN), pages 287-293; P. Kreutzer: "Experimental Investigations on a Digital Mobile Radio Telephone System using TDMA and Spread Spectrum Techniques"**

**Beschreibung**

Die Erfindung bezieht sich auf ein Verfahren zur Gewinnung des Rahmentaktes auf der Empfangsseite eines bandbegrenzten Übertragungskanals, über den digitale Signale übertragen werden, die empfangsseitig abgetastet werden.

Bei Funkübertragungen sind Mehrwegeausbreitungen unvermeidlich. Dabei kann es vorkommen, daß die Laufzeitunterschiede mehrere übertragene Symbole des digitalen Signals betragen. Für die digitale Nachrichtenübertragung ist aber eine zeitlich konstante Lage des Sende- und Empfangstaktes bzw. Fensters wichtig.

Die Eigenschaften eines Übertragungskanals sind durch eine Kanalimpulsantwort beschreibbar. Sie beschreibt die Antwort der Übertragungsstrecke auf einen Dirac-Stoß als Eingangssignal in Abhängigkeit von der Verzögerung. Bei linearer Modulation können auch deren Eigenschaften mittels einer Kanalimpulsantwort beschrieben werden. Die Kanalimpulsantwort gibt dann sowohl die Eigenschaften der Modulation als auch die des Übertragungskanals an. Das Empfangssignal im Basisband kann dann durch Faltung der komplexen Kanalimpulsantwort mit den gesendeten reellen oder komplexen Symbolen beschrieben werden.

Für die folgenden Ausführungen spielt es keine Rolle, ob die Kanalimpulsantwort nur die Eigenschaften des Übertragungskanals oder auch die Eigenschaften der Modulation angibt. Da das Empfangssignal bandbegrenzt ist, kann es in jedem Falle abgetastet werden, und die Kanalimpulsantwort ist dann durch eine zeitdiskrete Folge komplexer oder reeller Zahlen endlicher Länge gegeben.

Bei der Taktsynchronisation einer digitalen Übertragung ist zwischen Rahmentakt und Symboltakt zu unterscheiden. Beim Symboltakt wird der Abtasttakt derart geregelt, daß eine optimale Demodulation möglich ist. Bei der Rahmensynchronisation soll der Beginn eines Rahmens bestimmt werden. Ein Rahmen besteht aus einer bestimmten Anzahl von Symbolen. Als Genauigkeit wird hierbei mindestens eine Symbollänge gefordert.

Wie eingangs erwähnt, können bei Mehrwegeausbreitung die Zeitverschiebungen der empfangegen Signale deutlich größer als eine Symboldauer sein. Ist die Kanalimpulsantwort zeitvariant, kann sich somit der Beginn eines Rahmens von einem zum nächsten Rahmen jeweils um mehrere Symbollängen verschieben. Von einem festen Symboltakt kann nun nicht mehr die Rede sein. In der EP-C-0 151 280 ist ein Verfahren beschrieben, wie in diesem Falle trotzdem demoduliert werden kann. Als Rahmentakt muß dazu aber der frühestmögliche Zeitpunkt bekannt sein, zu dem das erste Symbol eines Rahmens im Empfänger eintreffen kann. Dies bedeutet, daß der Ankunftszeitpunkt des ersten möglichen Pfades der Kanalimpulsantwort bekannt sein muß. Der zeitlich erste Pfad ist ein Glied in der Kanalimpulsantwort, das zeitlich als erstes signifikant ist, beispielsweise einen vorbestimmten meßbaren Pegel erreicht hat.

Ein einfaches Verfahren zur empfangsseitigen Taktgewinnung wäre nun die Mittelung der Ankunftszeiten des jeweils ersten Pfades in mehreren aufeinanderfolgenden Kanalimpulsantworten. Der Nachteil ist aber, daß aufgrund der Mehrwegeausbreitung sich ein ziemlich großer Jitter des gewonnen Taktes ergibt. Auch bei gutem Signal/Rausch-Verhältnis kann der erste mögliche Pfad durch Fading in einer Kanalimpulsantwort verschwinden. In die Mitteilung geht dann ein später ankommender Pfad ein. Hierdurch wird ein Taktjitter erzeugt.

Ein Verfahren gemäß dem Oberbegriff des Anspruchs 1 ist aus US-A-4 899 367 bekannt.

Der Erfindung liegt die Aufgabe zugrunde, ein Verfahren der eingangs genannten Art anzugeben, mit dem ein Rahmentakt erzeugt werden kann, der weitgehend frei von Frequenzschwankungen ist.

Diese Aufgabe wird durch die im Anspruch 1 angegebene Erfindung gelöst. Weiterbildungen der Erfindung sind Gegenstand der Unteransprüche.

Gemäß der Erfindung wird der Rahmentakt auf den zeitlich ersten Pfad mehrerer aufeinanderfolgender Kanalimpulsantworten synchronisiert. Dadurch ergibt sich auch bei Mehrwegeunsicherheiten nur ein kleiner Jitter.

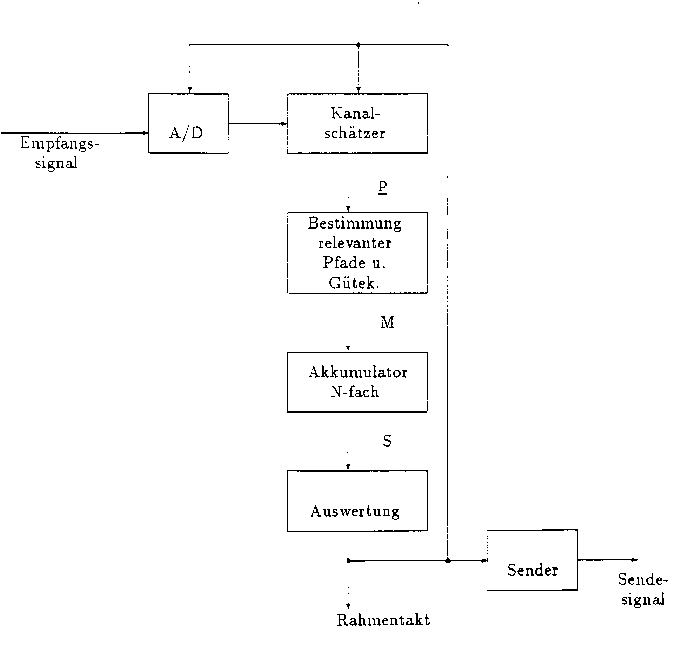

Die Erfindung wird nachfolgend unter Bezugnahme auf die Zeichnung näher erläutert.

Die Zeichnung zeigt als Blockschaltbild eine Anordnung zur Ausführung des Verfahrens in einem Sende/Empfangs-Gerät.

Im Empfangsteil des Sende/Empfangs-Geräts wird das Empfangssignal zunächst A/D gewandelt. Mit einem Kanalschätzer wird in vorgegebenen zeitlichen Abständen die Kanalimpulsantwort gemessen. Dieses erfolgt zweckmäßigerweise mit Hilfe einer dem Empfänger bekannten Datenfolge (Trainingssequenz), die vom Sender (nicht zu verwechseln mit dem Sendeteil des Sende/Empfangs-Gerätes) in regelmäßigen Abständen ausgesendet wird. Aus der Kanalimpulsantwort werden die für die Taktschätzung relevanten Pfade ermittelt. Solche sind, wie bereits erwähnt, solche Glieder einer Zahlenfolge, aus der das gewandelte Signal besteht, die ein bestimmtes Kriterium erfüllen. Beispiele für solche Kriterien werden weiter unten angegeben.

Für jedes relevante Glied der Kanalimpulsantwort wird ein Maß für seine Güte $M_i$ bestimmt. Nicht relevante Pfade werden in der Form berücksichtigt, daß für sie das Gütemaß auf null gesetzt wird. Es wird nun ein Speicher $S_i$ betrachtet, der dieselbe Länge hat, wie die gemessene Kanalimpulsantwort. Zu Beginn eines Mittelungsintervalls soll für alle i der Speicher $S_i$ auf null gesetzt werden. Nach jeder Messung der Kanalimpulsantwort wird für alle i das Gütemaß $M_i$ an entsprechender Stelle akkumuliert:

$$S_i = S_i + M_i \text{ für alle i mit } 0 \leq i \leq N - 1$$

wobei N die Anzahl der Glieder der Kanalimpulsantwort ist.

Nach einer bestimmten Anzahl von Messungen der Kanalimpulsantwort wird der Takt in der folgenden Form bestimmt:

Es wird zu jedem akkumulierten Speicherinhalt Si ein weiteres Gütemaß $G_i$ berechnet. Zum Beispiel kann $G_i = S_i$ gesetzt werden. Als Beginn eines Rahmens, d.h. als Rahmentakt, wird die zeitlich erste Überschreitung eines bestimmten Schwellenwertes THR durch das weitere Gütemaß (mit dem Index ir) angesehen:

$$ir = \min_{i = 0,\ldots,N-1} \left\{ G_i > THR \right\}$$

Aufgrund dieser Maßnahmen tritt der oben beschriebene Nachteil nicht mehr auf. Kanalimpulsantworten, bei denen der erste mögliche Pfad wegen Fading nicht mehr vorhanden ist, werden bei der Bildung der ersten zeitlichen Schwellenwertüberschreitung nicht mehr berücksichtigt.

Soll der Takt feiner als die Abtastrate, mit der das Empfangssignal abgetastet wird, aufgelöst werden, können $G_{ir-1}$ und $G_{ir}$ miteinander verglichen werden, und der Takt wird entsprechend des Verhältnisses beider Werte ermittelt.

Der Schwellenwert THR kann ebenfalls aus $S_i$ berechnet werden. Dies ist beispielsweise in der folgenden Form möglich:

$$THR = THR_0 \sum_{i=0}^{N-1} S_i$$

wobei $THR_o$ eine Konstante ist. Dieses Verfahren wird mit der in der Zeichnung dargestallten Anordnung ausgeführt.

Der Rahmentakt kann durch Mittelung über mehrere Meßintervalle noch verbessert werden.

Zur Berechnung des Gütemaßes $M_i$ der relevanten Pfade kommen verschiedene Verfahren in Betracht. $M_i$ kann unmittelbar aus der Kanalimpulsantwort berechnet werden. Hierfür kann der Betrag oder die Energie eines jeden Abtastwertes $p_i$ genommen werden:

$$M_i = |p_i| \text{ für alle i mit } 0 \leq i \leq N - 1$$

bzw.

$$M_i = p_i p_i^* \text{ für alle i mit } 0 \leq i \leq N - 1$$

Als Kriterium für die Auswahl relevanter Pfade kann verlangt werden, daß der Betrag bzw. die Energie eines Abtastwertes ein bestimmtes Maß überschreitet. Dieses Maß kann z.B. auf den maximalen Betrag der Kanalimpulsantwort bzw. auf die gesamte Energie der Kanalimpulsantwort oder auf die Energie bzw. Leistung des Empfangssignals normiert werden. Auch ist es möglich, die Energie der Kanalimpulsantwort in einem Fenster gegebener Länge durch Verschieben zu maximieren. Relevante Pfade sind dann all jene, die innerhalb des Fensters liegen.

Da es für die Taktgewinnung besonders auf den ersten Pfad innerhalb der Kanalimpulsantwort ankommt, kann es auch sinnvoll sein, nur jeweils einen einzigen relevanten Pfad zu berücksichtigen. Dieses ist dann der zeitlich erste Abtastwert, dessen Betrag oder Energie einen gewissen Schwellenwert überschreitet. Dieser Schwellenwert kann wieder wie oben normiert werden. In diesem Fall wird dann nach jeder Messung der Kanalimpulsantwort nur an einer Stelle im Speicher ein Wert akkumuliert. Für das Gütemaß $M_i$ kann z.B. dann die gesamte Energie der Kanalimpulsantwort eingesetzt werden. Es ist ferner möglich, aus dem Empfangssignal und einer dem Empfänger bekannten Datenfolge, einer sogenannten Trainingssequenz, die vom Sender in regelmäßigen Abständen abgestrahlt wird, ein Gütekriterium zu berechnen. Dieses kann z.B. das Signal/Rausch-Verhältnis sein.

Die Erfindung ist in allen Systemen zur Übertragung digitaler Daten anwendbar. Als solche Systeme kommen FDMA-, TDMA- oder CDMA-Systeme in Frage. Sie ist besonders zur Behebung der Schwierigkeiten gedacht, die Mehrwegeausbreitungen mit sich bringen. Einzige Voraussetzung ist, daß in regelmäßigen Abständen die Kanalimpulsantwort gemessen wird. Eine hierzu ausgewertete bekannte Datenfolge (Trainingssequenz) kann an beliebiger Stelle innerhalb eines Datenrahmens liegen, insbesondere kann sie bei einem TDMA-System in der Mitte eines Zeitschlitzes liegen.

Mit Hilfe der Erfindung ist sowohl eine Rahmentaktregelung in einem Empfänger erzielbar, als auch eine Sendetaktregelung im Falle ihres Einsatzes in einem Sende/Empfangs-Gerät, bei welchem der Sendertakt aus dem mit Hilfe des Empfängers und der Erfindung gewonnenen Rahmentakt synchronisiert wird.

In Mobilfunknetzen ist der Rahmentakt einer Basisstation häufig fest, und die Mobilstationen müssen ihren Sendetakt entsprechend den Anweisungen der Basisstation einstellen. Die Erfindung ist in einem solchen Netz auch auf Seiten der Basisstation einsetzbar, die einen mittels der Erfindung gewonnen Rahmentakt mit ihrem Festtakt vergleicht und daraus eine Information für die Mobilstation ableitet, die an die Mobilstation ausgesendet wird und diese veranlaßt, ihrem Rahmentakt so einzustellen, daß er mit dem Festtakt der Basisstation übereinstimmt.

**Patentansprüche**

1. Verfahren zur Gewinnung des Rahmentaktes auf der Empfangsseite eines bandbegrenzten Übertragungskanals, über den digitale Signale übertragen werden, die empfangsseitig abgetastet werden, **dadurch gekennzeichnet**, daß in vorgegebenen zeitlichen Abständen eine empfangsseitig bekannte Datenfolge auf den Übertragungskanal ausgesendet und empfangsseitig die Impulsantwort des Übertragungskanals als Zahlenfolge endlicher Länge gemessen wird und der Rahmentakt auf den zeitlich ersten Pfad mehrerer aufeinanderfolgender Kanalimpulsantworten synchronisiert wird, wobei der zeitlich erste Pfad ein Glied in der Zahlenfolge der Kanalimpulsantwort ist, das zeitlich als erstes ein vorbestimmtes Kriterium erfüllt.

2. Verfahren nach Anspruch 1, dadurch gekennzeichnet, daß die für die Taktgewinnung relevanten Pfade für jede Kanalimpulsantwort ermittelt werden und für diese jeweils ein Gütemaß (M) bestimmt wird, für nacheinander gemessene Kanalimpulsantworten das Gütemaß (M) pfadweise in einem Speicher akkumuliert wird, am Ende eines Mittelungsintervalls zu jedem akkumulierten Wert ein weiteres Gütemaß (G) bestimmt wird und der Rahmentakt entsprechend der zeitlich ersten Überschreitung eines vorgegebenen Schwellenwertes (THR) durch das weitere Gütemaß (G) bestimmt wird.

3. Verfahren nach Anspruch 2, dadurch gekennzeichnet, daß als weiteres Gütemaß (G) der akkumulierte Wert aus dem Speicher pfadweise entnommen wird.

4. Verfahren nach Anspurch 2 oder 3, dadurch gekennzeichnet, daß der Schwellenwert (THR) aus den akkumulierten Werten berechnet wird.

5. Verfahren nach Anspruch 4, dadurch gekennzeichnet, daß der Schwellenwert (THR) das Produkt aus einer konstanten und der Summe der akkumulierten Werte ist.

6. Verfahren nach einem der Ansprüche 2 bis 5, dadurch gekennzeichnet, daß aus den Werten des weiteren Gütemaßes (G) zeitlich unmittelbar vor und nach dem Überschreiten des Schwellenwertes (THR) durch Mittelung ein Taktsignal gewonnen wird.

7. Verfahren nach einem der Ansprüche 2 bis 6, dadurch gekennzeichnet, daß der Zeitpunkt, zu welchem das weitere Gütemaß (G) den Schwellenwert (THR) überschreitet, über mehrere Meßintervalle gemittelt wird.

8. Verfahren nach einem der Ansprüche 2 bis 7, dadurch gekennzeichnet, daß für das Gütemaß (M) pfadweise der Betrag der Glieder der Kanalimpulsantwort gemessen wird.

9. Verfahren nach einem der Ansprüche 2 bis 7, dadurch gekennzeichnet, daß für das Gütemaß (M) pfadweise die Energie der Glieder der Kanalimpulsantwort verwendet wird.

10. Verfahren nach Anspruch 2 oder einem der davon abhängigen Ansprüche, dadurch gekennzeichnet, daß relevante Pfade der Kanalimpulsantwort dadurch ausgewählt werden, daß die Energie oder der Betrag der entsprechenden Glieder der Kanalimpulsantwort eine bestimmte Schwelle überschreiten.

11. Verfahren nach einem der vorhergehenden Ansprüche, dadurch gekennzeichnet, daß das vorbestimmte Kriterium aus der gesamten Energie der Kanalimpulsantwort oder aus der maximalen Amplitude eines Gliedes der Kanalimpulsantwort oder aus der Leistung des Empfangssignals oder einer Kombination der vorgenannten Größen berechnet wird.

12. Verfahren nach einem der vorhergehenden Ansprüche, dadurch gekennzeichnet, daß die relevanten Pfade der Kanalimpulsantwort durch Maximierung der Energie in einem Fenster gegebener Länge, die kleiner als die der Kanalimpulsantwort ist, ausgewählt werden.

13. Verfahren nach Anspruch 2 oder einem der davon abhängigen Ansprüche, dadurch gekennzeichnet, daß nur ein solcher relevanter Pfad der Kanalimpulsantwort ausgewählt wird, der zeitlich als erster ein bestimmtes Gütekriterium erfüllt.

14. Verfahren nach Anspruch 13, dadurch gekennzeichnet, daß als Gütekriterium die erste Schwellenwertüberschreitung der Energie oder der Amplitude der Glieder der Kanalimpulsantwort genommen wird.

15. Verfahren nach einem der vorhergehenden Ansprüche, dadurch gekennzeichnet, daß für das Gütemaß (M) ein Wert bestimmt wird, der für alle relevanten Pfade jeweils einer gemessenen Kanalimpulsantwort identisch ist.

16. Verfahren nach Anspruch 15, dadurch gekennzeichnet, daß das Gütemaß (M) die gesamte Energie der Kanalimpulsantwort ist.

17. Verfahren nach Anspruch 15, dadurch gekennzeichnet, daß zur Bestimmung des Gütemaßes (M) die empfangsseitig bekannte Datensequenz benutzt wird und die Übereinstimmung der im Empfänger gespeicherten Sequenz mit der empfangenen und demodulierten Sequenz ausgewertet wird.

18. Verfahren nach Anspruch 17, dadurch gekennzeichnet, daß bei Verwendung in einem TDMA-System die bekannte Datenfolge in der Mitte eines Zeitschlitzes liegt.

19. Verfahren nach einem der vorhergehenden Ansprüche, dadurch gekennzeichnet, daß mit dem gewonnen Rahmentakt ein am Empfangsort erzeugter Sendetakt synchronisiert wird.

20. Verfahren nach einem der vorhergehenden Ansprüche, gekennzeichnet durch seine Anwendung in einem Mobilfunknetz aus ortsfesten und mobilen Sende/Empfangs-Stationen, wobei in den ortsfesten Stationen der nach dem Verfahren gewonnene Takt des Empfangssignals mit einem internen Festtakt verglichen und aus dem Vergleichsergebnis eine Nachricht erzeugt wird, die an die mobile Station zum Zwecke der Veränderung des Sendetaktes derselben zum Synchronisieren mit dem Festtakt der ortsfesten Station gesendet wird.

## Claims

1. A method for recovery of the frame clock at the reception side of a band-limited communications channel through which digital signals are transmitted that are sampled at the reception side, characterized in that a data sequence known at the reception side is transmitted on the communications channel at predetermined intervals and the pulse response of the communications channel is measured at the reception side as a sequence of numbers of finite length and the frame clock is synchronized to the chronologically first path of a plurality of successive channel pulse responses, wherein the chronologically first path is a member in the sequence of numbers of the channel pulse response which is the first one to fulfill a certain criterion.

2. A method according to claim 1, characterized in that the paths relevant for the clock recovery are determined for each channel pulse response and that a quality measure (M) is determined for each path, the quality measure (M) for successively measured channel pulse responses is accumulated path-wise in a memory at the end of an averaging interval a further quality measure (G) for each accumulated value is determined, and the frame clock is determined in accordance with the chronological first exceeding of a predetermined threshold value (THR) by the further quality measure (G).

3. A method according to claim 2, characterized in that the accumulated value is path-wise taken from the memory as a further quality measure (G).

4. A method according to claim 2 or 3, characterized in that the threshold value (THR) is calculated from the accumulated values.

5. A method according to claim 4, characterized in that the threshold value (THR) is the product of a constant and of the sum of the accumulated values.

6. A method according to one of claims 2 to 5, characterized in that a clock signal is recovered by averaging from the values of the further quality measure (G) chronologically directly before and after the exceeding of the threshold value (THR).

7. A method according to one of claims 2 to 6, characterized in that the time at which the further quality measure (G) exceeds the threshold value (THR) is averaged over a plurality of measuring intervals.

8. A method according to one of claims 2 to 7, characterized in that for determining the quality measure (M) the value of the members of the channel pulse response is measured path-wise.

9. A method according to one of claims 2 to 7, characterized in that for determining the quality measure (M) the energy of the members of the channel pulse response is used path-wise.

10. A method according to claim 2 or one of the claims depending thereon, characterized in that relevant paths of the channel pulse response are selected in that the energy or the value of the respective members of the channel pulse response exceed a predetermined threshold value.

11. A method according to one of the preceding claims, characterized in that the predetermined criterion is calculated from the entire energy of the channel pulse response or from the maximum amplitude of a member of the channel pulse response or from the power of the receiver signal or from a combination of the above-mentioned variables.

12. A method according to one of the preceding claims, characterized in that the relevant paths of the channel pulse response are selected by maximization of the energy in a window of a given length that is smaller than the channel pulse response.

13. A method according to claim 2 or one of the claims dependent thereon, characterized in that only a relevant path of the channel pulse response is selected, that is chronologically the first one to fulfill a certain quality criterion.

14. A method according to claim 13, characterized in that the first exceeding of the threshold value of the energy or the amplitude of the members of the channel pulse response is taken as a quality criterion.

15. A method according to one of the preceding claims, characterized in that a value is defined for the quality measure (M) that is identical for all relevant paths of a respective measured channel pulse response.

16. A method according to claim 15, characterized in that the quality measure (M) is the entire energy of the channel pulse response.

17. A method according to claim 15, characterized in that the data sequence known at the reception side is used for determining the quality measure (M) and the coincidence of the sequence stored in the memory and the received and demodulated sequence is evaluated.

18. A method according to claim 17, characterized in that the known data sequence is in the middle of a time slot when using a TDMA system.

19. A method according to one of the preceding claims, characterized in that a transmission clock generated at the receiver location is synchronized by the recovered frame clock.

20. A method according to one of the preceding claims, characterized by its application in a mobile network of fixed and mobile transceiver stations, wherein in the fixed stations the clock of the receiver signals recovered according to the method is compared to an internal fixed clock and a message is generated from the comparison result which is transmitted to the mobile station for the purpose of changing the transmission clock of the same for synchronization with the fixed clock of the fixed station.

# EP 0 633 670 B1

**Revendications**

1. Procédé pour la récupération de la phase de l'horloge de trame du côté réception d'un canal de communication à bande limitée, par l'intermédiaire duquel des signaux numériques sont transmis, qui sont scrutés du côté réception, caractérisé en ce que, à des espacements temporels prédéterminés, une suite de données, connue côté réception, est envoyée sur le canal de transmission et, côté réception, la réponse d'impulsion du canal de transmission est mesurée sous forme de suite de nombres, de longueur finie, et la phase de l'horloge de trame est synchronisée sur le premier chemin temporel de plusieurs réponses d'impulsion de canal successives, le premier chemin temporel constituant, dans la suite de nombres de la réponse d'impulsion de canal, un membre qui satisfait temporellement le premier à un critère prédéterminé.

2. Procédé selon la revendication 1, caractérisé en ce que les chemins, importants pour la récupération de la phase, sont déterminés pour chaque réponse d'impulsion de canal et, pour chacun de ceux-ci, est déterminé un indice de qualité (M), l'indice de qualité (M) étant accumulé, chemin par chemin, dans une mémoire, pour des réponses d'impulsion de canal mesurées les unes après les autres, un autre indice de qualité (G) étant déterminé à la fin de l'intervalle de formation de la moyenne pour chaque valeur accumulée, et la phase de l'horloge de trame étant déterminée de manière correspondante au premier dépassement temporel d'une valeur de seuil (THR) prédéterminée, au moyen de l'autre indice de qualité (G).

3. Procédé selon la revendication 2, caractérisé en ce que l'on prélève chemin par chemin comme autre indice de qualité (G) la valeur accumulée issue de la mémoire.

4. Procédé selon la revendication 2 ou 3, caractérisé en ce que la valeur de seuil (THR) est calculée à partir des valeurs accumulées.

5. Procédé selon la revendication 4, caractérisé en ce que la valeur de seuil (THR) est le produit issu d'une constante et de la somme des valeurs accumulées.

6. Procédé selon l'une des revendications 2 à 5, caractérisé en ce que, à partir des valeurs de l'autre indice de qualité (G), on obtient, temporellement directement avant et après le dépassement de la valeur de seuil (THR), un signal de cadencement, par formation d'une moyenne.

7. Procédé selon l'une des revendications 2 à 6, caractérisé en ce que le moment auquel l'autre indice de qualité (G) dépasse la valeur de seuil (THR) est déterminé sur plusieurs intervalles de mesure.

8. Procédé selon l'une des revendications 2 à 7, caractérisé en ce que, pour l'indice de qualité (M), on mesure chemin par chemin la valeur des membres de la réponse d'impulsion de canal.

9. Procédé selon l'une des revendications 2 à 7, caractérisé en ce que l'on utilise pour l'indice de qualité (M), chemin par chemin, l'énergie des membres de la réponse d'impulsion de canal.

10. Procédé selon la revendication 2 ou l'une des revendications dépendant de celle-ci, caractérisé en ce que des chemins, présentant une importance, de la réponse d'impulsion de canal sont sélectionnés par le fait que l'énergie ou la valeur des membres correspondants de la réponse d'impulsion de canal dépasse un seuil déterminé.

11. Procédé selon l'une des revendications précédentes, caractérisé en ce que le critère prédéterminé est calculé à partir de l'énergie totale de la réponse d'impulsion de canal, ou bien de l'amplitude maximale d'un membre de la réponse d'impulsion de canal, ou de la puissance du signal de réception, ou d'une combinaison des grandeurs prédéterminées.

12. Procédé selon l'une des revendications précédentes, caractérisé en ce que les chemins, présentant une importance, de la réponse d'impulsion de canal sont sélectionnés par le fait de rendre maximale l'énergie dans une fenêtre de longueur donnée, qui est inférieure à celle de la réponse d'impulsion de canal.

13. Procédé selon la revendication 2 ou l'une des revendications dépendant de celle-ci, caractérisé en ce que seul est sélectionné un chemin, présentant un importance, de la réponse d'impulsion de canal qui satisfait temporellement en premier à un critère de qualité déterminé.

**14.** Procédé selon la revendication 13, caractérisé en ce que l'on prend comme critère de qualité le premier dépassement de valeur de seuil de l'énergie ou de l'amplitude des membres de la réponse d'impulsion de canal.

**15.** Procédé selon l'une des revendications précédentes, caractérisé en ce qu'on détermine pour l'indice de qualité (M) une valeur qui est identique pour tous les chemins, présentant une importance, chaque fois d'une réponse d'impulsion de canal mesurée.

**16.** Procédé selon la revendication 15, caractérisé en ce que l'indice de qualité (M) est l'énergie totale de la réponse d'impulsion de canal.

**17.** Procédé selon la revendication 15, caractérisé en ce que, pour effectuer la détermination de l'indice de qualité (M), on utilise une séquence de données connue côté réception et on évalue la coïncidence de la séquence mémorisée dans le récepteur avec la séquence reçue et démodulée.

**18.** Procédé selon la revendication 17, caractérisé en ce que, en cas d'utilisation dans un système TDMA (Time-Division-Multiple-Access, Accès Multiple par Répartition dans le Temps), la suite de données connues se trouve au milieu d'une tranche de temps.

**19.** Procédé selon l'une des revendications précédentes, caractérisé en ce qu'une cadence d'émission, générée sur le site de réception, est synchronisée avec la phase de l'horloge de trame obtenue.

**20.** Procédé selon l'une des revendications précédentes, caractérisé par son application dans un réseau de postes de radio mobiles, à partir de postes d'émission/réception localement fixes et mobiles, la phase du signal de réception obtenue, selon le procédé, aux postes localement fixes étant comparée à la phase fixe interne et, à partir du résultat de la comparaison, est générée une information qui est envoyée au poste mobile, dans le but de modifier la phase d'émission de celui-ci en vue d'obtenir une synchronisation avec la phase fixe du poste localement fixe.

Empfangssignal

A/D

Kanalschätzer

$\underline{P}$

Bestimmung
relevanter
Pfade u.
Gütek.

M

Akkumulator
N-fach

S

Auswertung

Rahmentakt

Sender

Sendesignal